# EUROPEAN PATENT APPLICATION

(11) **EP 2 865 770 A1**
(43) Date of publication of application: **29.04.2015**
(21) Application number: 13806888.7
(22) Date of filing: 19.06.2013
(51) Int. Cl.: C22C 1/10, B22D 19/00, B22D 19/14, C22C 21/00

(54) **METHOD FOR PRODUCING ALUMINUM COMPOSITE MATERIAL**

(30) Priority: 22.06.2012 JP 2012140383
(71) Applicant: Aisin Seiki Kabushiki Kaisha, Kariya-shi Aichi 448-8650 (JP)
(72) Inventor: MINAKI, Hajime, Kariya-shi Aichi 448-8650 (JP); WAKIMOTO, Yoshiki, Kariya-shi Aichi 448-8650 (JP)
(74) Representative: TBK
(86) International application number: PCT/JP2013/066829
(87) International publication number: WO 2013/191204

(57) **Abstract**

Provided is a method of producing an aluminum composite material, the method including: a decalcification treatment step of eluting a calcium oxide component from cement to form decalcified cement having a reduced content of the calcium oxide component; and an aluminum oxide formation step of bringing molten aluminum into contact with the decalcified cement to replace, among metal oxide components contained in the decalcified cement, metal oxide components other than the calcium oxide component, in particular, a silicon dioxide component, with aluminum oxide.

## Description

### Technical Field

The present invention relates to a method of producing an aluminum composite material.

### Background Art

There have hitherto been conducted studies on various aluminum composite materials and their production methods. For example, Patent Literature 1 discloses an aluminum composite material including an aluminum base material and ceramics hollow particles dispersed therein. For forming the ceramics hollow particles contained in the aluminum composite material, there is prepared a precursor in which ceramics powder is attached to a resin so as to be embedded in a surface of the resin. Then, the precursor is sintered to remove the resin to form the ceramics hollow particles. In addition, as an example of materials for the ceramics powder, various cements are exemplified.

Non Patent Literature 1 involves a discussion of a production process for an aluminum/aluminum oxide composite material formed through a reaction between waste glass and molten aluminum scrap. Non Patent Literature 1 reports that, when the waste glass (soda-lime glass) and the molten aluminum scrap react with each other, a silicon dioxide (SiO₂) component, which is a main component of the waste glass, is replaced with aluminum oxide (Al₂O₃) (silicon dioxide is reduced) based on the chemical reaction formula represented by the following formula (1), and metal oxides other than a calcium oxide (CaO) component in the waste glass are also replaced with aluminum oxide (alumina) (that is, calcium oxide is not replaced with alumina).

3SiO₂(s)+4Al(l)→2Al₂O₃(s)+3Si(l) (1)

### Citation List

### Patent Literature

[PTL 1] JP 2004-285394 A

### Non Patent Literature

[NPL 1] "Fundamental study on reaction between waste glass and molten aluminum scrap", Journal of the Japan Institute of Metals and Materials, Vol. 70, No. 6 (2006) 483-488

### Summary of Invention

The aluminum composite material including the aluminum oxide (alumina) component has a high hardness. Therefore, such aluminum composite material is utilized for materials requiring high rigidity. As disclosed in Non Patent Literature 1, the research report indicates that the waste glass can be effectively utilized for the production of the aluminum composite material including the aluminum oxide component and exhibiting high rigidity. While on the other hand, an object of the present invention is to produce a highly-rigid aluminum composite material including an aluminum oxide component through effective utilization of cement, not of waste glass.

According to one embodiment of the present invention, there is provided a method of producing an aluminum composite material, the method including: a decalcification treatment step of eluting (removing) a calcium oxide component from cement to form decalcified cement having a reduced content of the calcium oxide component; and an aluminum oxide formation step of bringing molten aluminum into contact with the decalcified cement to replace, among metal oxide components contained in the decalcified cement, metal oxide components other than calcium oxide with aluminum oxide. In the aluminum oxide formation step in this case, among the metal oxide components contained in the decalcified cement, at least a silicon dioxide component is preferably replaced with aluminum oxide. Further, the decalcified cement preferably has a ratio of a mass of a silicon dioxide component W_{SiO2} to a sum total of the mass of the silicon dioxide component W_{SiO2} and a mass of the calcium oxide component W_{CaO}, (W_{SiO2}+W_{Cao}), the ratio being represented as R_{SiO2}(=W_{SiO2}/(W_{SiO2}+W_{CaO})), of 0.75 or more. In other words, the decalcification treatment step is preferably a step of eluting a calcium oxide component from cement to form decalcified cement having a reduced content of the calcium oxide component so that the decalcified cement has a ratio of a mass of a silicon dioxide component W_{SiO2} to a sum total of the mass of the silicon dioxide component W_{SiO2} and a mass of the calcium oxide component W_{CaO}, (W_{SiO2}+W_{CaO}), the ratio being represented as R_{SiO2}(=W_{SiO2}/(W_{SiO2}+W_{CaO})), of 0.75 or more. Further, the decalcification treatment step is preferably a step of eluting the calcium oxide component from the cement through acid treatment of the cement.

For example, when Portland cement, which is a typical cement, is just brought into contact with molten aluminum, the chemical reaction represented by the formula (1) does not occur sufficiently, and hence, the silicon dioxide component contained in the cement is not replaced with aluminum oxide. The probable reasons for this are the following. The mass fractions of the silicon dioxide (SiO₂) component and the calcium oxide (CaO) component contained in the Portland cement are 20.5 wt% and 68.7 wt%, respectively. In contrast, in soda-lime glass, which is a general waste glass, the mass fractions of the silicon dioxide (SiO₂) component and the calcium oxide (CaO) component are 73 wt% and 5 wt%, respectively. As is evident from these facts, the compositional ratio of the calcium oxide component in the Portland cement (68.7 wt%) is extremely higher than that in the soda-lime glass (5 wt%). In addition, the compositional ratio of the silicon dioxide component in the Portland cement (20.5 wt%) is considerably lower than that in soda-lime glass (73 wt%). Therefore, in the Portland cement, a component that does not chemically react with aluminum is included in a large amount as compared to a component that chemically reacts with aluminum. This may inhibit the reaction of the formula (1).

In contrast, according to the present invention, the calcium oxide (CaO) component is eluted from the cement in the decalcification treatment step, and thereby, the decalcified cement in which the content of the calcium oxide component is reduced as compared to (lower than) the content of the calcium oxide component in the cement before the decalcification treatment step is formed. The decalcified cement thus formed is brought into contact with molten aluminum. By reducing the content of the calcium oxide (CaO) component, the reactivity between the decalcified cement and the molten aluminum is improved. In particular, in the case where the decalcified cement formed in the decalcification treatment step has a ratio of the mass of the silicon dioxide (SiO₂) component W_{SiO2} to the sum total of the mass of the silicon dioxide (SiO₂) component W_{SiO2} and the mass of the calcium oxide (CaO) component W_{CaO}, (W_{SiO2}+W_{CaO}), the ratio being represented as R_{SiO2}(=W_{SiO2}/(W_{SiO2}+W_{CaO})), of 0.75 or more, the reaction of the formula (1) sufficiently occurs when the decalcified cement is brought into contact with the molten aluminum in the aluminum oxide formation step, and thereby, among metal oxide components contained in the decalcified cement, metal oxide components other than calcium oxide, in particular, at least the silicon dioxide (SiO₂) component, are replaced with aluminum oxide (that is, aluminum oxide is formed). Thus, an aluminum composite material including an aluminum oxide component can be produced through effective utilization of cement.

In addition, the aluminum composite material produced by the production method of the present invention has a configuration in which aluminum oxide particles each having a high hardness (about 1,500 Hv) are dispersed in an aluminum base material, and hence, the hardness of the aluminum composite material thus obtained is much higher than that of general cement (about 400 Hv). Therefore, an aluminum composite material having high rigidity can be produced.

Moreover, with a view to achieving high rigidity, it is often the case that the aluminum composite material is formed by adding preliminarily produced hard particles such as SiC or Al₂O₃ to an aluminum alloy. However, such hard particles are expensive in themselves and thus the material cost inevitably rises. In contrast, cement is inexpensive. Therefore, by replacing metal oxide components (in particular, silicon dioxide component) contained in cement with aluminum oxide as in the present invention, an aluminum composite material having high rigidity can be produced at low cost.

Further, it is preferred that the method of producing an aluminum composite material of the present invention further include a purification step of heating the decalcified cement to remove impurities attached to a surface of the decalcified cement, and that the aluminum oxide formation step include a step of bringing the molten aluminum into contact with the decalcified cement in which the impurities are removed from the surface in the purification step. With this, the surface of the decalcified cement is purified in the purification step, and thereby, a more improved reactivity between the molten aluminum and the decalcified cement is achieved when the molten aluminum is brought into contact with the decalcified cement in the aluminum oxide formation step.

### Brief Description of Drawings

FIG. 1 is a schematic view of a device used in an alumina formation step.
FIG. 2 shows photographs observed with a FE-SEM and component analysis results with an EDX.
FIG. 3 is a graph showing results of measuring hardnesses of particles in aluminum composite materials with a micro Vickers tester (10 gf).

### Description of Embodiments

A method of producing an aluminum composite material according to the present invention includes a decalcification treatment step (calcium elution step) and an aluminum oxide formation step. Each of the steps is described hereinafter.

### <Decalcification treatment step>

In the decalcification treatment step, a calcium oxide (CaO) component is eluted from cement. The "cement" means an inorganic binder including a calcium oxide component, a silicon dioxide component, an iron oxide component, and the like. The cement to be used in the present invention needs to include at least silicon dioxide (silica), while its main component may be calcium oxide. A typical example of the cement is Portland cement. The main components of the Portland cement are tricalcium silicate (alite: 3CaO·SiO₂), dicalcium silicate (belite: 2CaO·SiO₂), calcium aluminate (aluminate: 3CaO·Al₂O₃), and calcium aluminoferrite (ferrite: 4CaO·Al₂O₃·Fe₂O₃). As is evident from the compositions of the components, the calcium oxide component, which does not react with molten aluminum, binds to the components (silicon dioxide component and iron oxide component), which react with molten aluminum. Therefore, an improvement in the reactivity with the molten aluminum is expected by eluting the calcium oxide component in the decalcification treatment step.

For eluting calcium oxide from the cement, the cement is preferably subjected to acid treatment. An acid to be used may be an organic acid or an inorganic acid. Preferably, an inorganic acid such as hydrochloric acid or sulfuric acid is used. The acid treatment allows calcium oxide to be eluted form the cement as a calcium ion.

By the decalcification treatment step, calcium oxide is eluted from the cement, and as a result, cement (decalcified cement) in which the content of calcium oxide is reduced as compared to (lower than) that in the cement before the decalcification treatment step is formed. In the embodiment, the decalcified cement was formed as described below.

First, 34.5 g of raw material cement (Portland cement) powder were weighed and then put into about 1 L of pure water in a test tank. After that, 30 ml of hydrochloric acid (35.0 to 37.0 wt%) was added to the pure water in the test tank, and stirring was performed until the pH reached a steady value. The steady value was pH=11.19. After that, the stirring was stopped, and the resultant solution was filtered and the cement powder was collected. The collected cement powder was put into about 1 L of pure water in the test tank again. Then, hydrochloric acid was added to the pure water little by little, and at the time when the pH became 4.20, the addition of hydrochloric acid was completed. At that time, the total added amount of hydrochloric acid was 66 ml.

By the addition of hydrochloric acid, chemical reactions represented by the formula (2) occur and calcium oxide contained in the cement is eluted into the aqueous solution as a calcium ion.

CaO+H₂O→Ca(OH)₂

Ca(OH)₂+2HCl→CaCl₂(Ca²⁺+2Cl⁻)+2H₂O (2)

Immediately after the completion of the addition of hydrochloric acid, the resultant solution in the test tank was filtered and the cement powder was collected. After that, the collected cement powder was heated to 300°C in a heating furnace, to remove water attached to the cement powder. The cement powder thus obtained is the decalcified cement.

### <Aluminum oxide formation step>

In the aluminum oxide formation step, molten aluminum is brought into contact with the decalcified cement. The molten aluminum may be a molten aluminum alloy, as long as its main component is aluminum. In addition, the molten aluminum to be brought into contact with the decalcified cement in the aluminum oxide formation step preferably has a temperature 100°C or more higher than a melting temperature of aluminum. For example, it it preferred to bring molten aluminum at 800°C into contact with the decalcified cement. As the temperature of the molten aluminum to be brought into contact is higher, the reactivity of the reaction of the formula (1) is more improved.

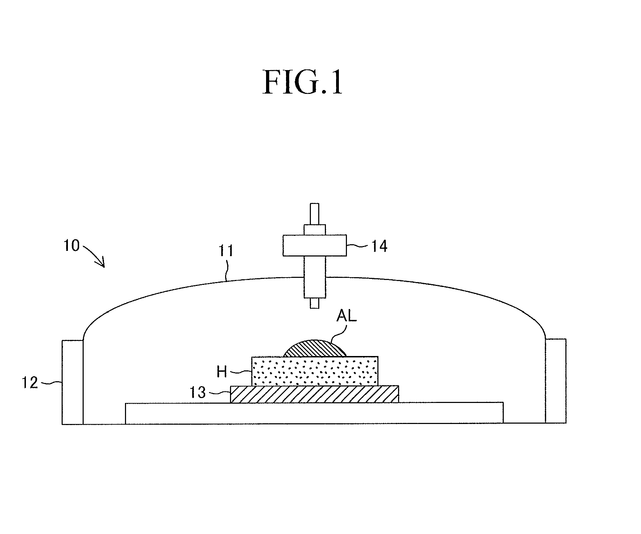

FIG. 1 a schematic view of a device used in the aluminum oxide formation step in this embodiment. A device 10 includes a chamber 11 having a dome shape and an electric furnace 12 provided on the outer periphery of the chamber 11. In the chamber 11, an alumina plate 13 is placed. In addition, a nozzle 14 is disposed above the alumina plate 13. From the nozzle 14, molten aluminum is allowed to fall in drops.

Prior to performing the alumina formation step by using the device 10 as described above, first, decalcified cement H is placed on the alumina plate 13 in the chamber 11. Next, the chamber 11 is depressurized to a vacuum state (<0.5 Torr). After that, the electric furnace 12 is activated to elevate the temperature in the chamber 11 up to 1,000°C (temperature elevation rate: 15°C/min). After the temperature elevation is completed, the state is maintained for 30 minutes, and then, the electric furnace 12 is stopped to allow the chamber 11 to cool. Through the treatment just described, adherent components (impurities) such as water attached to the surface of the decalcified cement H on the alumina plate 13 are removed, and thereby, the surface of the decalcified cement H is purified (surface purification step). After the cooling, the electric furnace 12 is activated again to heat the chamber 11. Next, gas in the chamber 11 is replaced with argon.

After that, the temperature in the chamber 11 is elevated up to 900°C (temperature elevation rate: 15°C/min). After the temperature elevation is completed, the temperature is maintained for 10 minutes, and then, molten aluminum is allowed to fall in drops from the nozzle 14. With this, molten aluminum AL is brought into contact with the decalcified cement H. At this time, reduction reactions of metal oxides as represented by the formula (1) occur, and the silicon dioxide component contained in the decalcified cement H is replaced with aluminum oxide (aluminum oxide formation step). In addition, metal oxide components other than the calcium oxide component contained in the decalcified cement H are also replaced with aluminum oxide. Thus, an aluminum composite material including aluminum oxide is produced. After allowing the molten aluminum to fall in drops, the resultant is left for 2 hours, and then, the electric furnace 12 is stopped to allow the chamber 11 to cool. After the cooling, the formed aluminum composite material is taken out.

### (Evaluation test)

The reduction reaction of silicon dioxide represented by the formula (1) is more likely to occur when the amount of silicon dioxide is large with respect to the amount of calcium oxide in the cement to be used for the reaction. In this connection, with a view to determining what amount of silicon dioxide with respect to the amount of calcium oxide in the cement used in the decalcification treatment step is needed to improve the reactivity of the formation reaction of aluminum oxide (reactivity of the reaction of the formula (1)), an evaluation test as described below was performed.

### 1. Production of evaluation sample

As the amount of calcium oxide to be eluted from the cement in the decalcification treatment step becomes larger, the amount of silicon dioxide with respect to the amount of calcium oxide becomes larger. In addition, the amount of calcium oxide to be eluted varies depending on the added amount of hydrochloric acid to be added in the decalcification treatment step. In this connection, three decalcified cements (cement powders A, B, and C) with different eluted amounts of calcium oxide were produced as raw material powders by changing the added amount of hydrochloric acid in the decalcification treatment step. Further, as Comparative Examples, raw material powders formed of quartz glass powder (SiO₂) and soda-lime glass powder were prepared. In these raw material powders, the ratio of the mass (or mass fraction) of silicon dioxide to the sum total of the mass (or mass fraction) of silicon dioxide and the mass (or mass fraction) of calcium oxide is represented by R_{SiO2}. Table 1 summarizes the ratio R_{SiO2}, grain diameter, density, and composition of each of the raw material powders. It should be noted that the composition was measured by ICP analysis (inductively-coupled plasma spectrometry).

**[Table 1]**

| Raw material powder | R_{SiO2} | Grain diameter [µm] | Density [g/cm³] | Composition [wt%] | | | | | | | |
|---|---|---|---|---|---|---|---|---|---|---|---|
| | | | | SiO₂ | CaO | MgO | Na₂O | Al₂O₃ | Fe₂O₃ | Others | Total |
| Quartz glass powder (SiO₂) | 1.00 | 12.5 | 2.2 | 99.9 | 0 | 0 | 0 | 0 | 0 | 0.1 | 100 |
| Soda-lime glass powder | 0.88 | 30.0 | 2.5 | 72 | 10 | 3 | 15 | 0 | 0 | 0 | 100 |
| Cement powder A | 0.23 | 19.8 | 3.3 | 20.5 | 68.7 | 1.2 | 0.3 | 4.5 | 2.6 | 2.2 | 100 |
| Cement powder B | 0.48 | 15.8 | 2.9 | 36.3 | 38.7 | 1.7 | 0.3 | 8.8 | 5.2 | 9 | 100 |
| Cement powder C | 0.75 | 17.0 | 2.6 | 48.6 | 16.2 | 0.8 | 0.1 | 8.5 | 6.9 | 19 | 100 |

Each of the raw material powders as shown in Table 1 was heated to 600°C or more in a reduced-pressure atmosphere and maintained for about 30 to 60 minutes for removing components (impurities such as water and gas) adsorbing onto the surface of each of the raw material powders. After the heating, a molten aluminum alloy (JIS alloy number A1070 (Si: 0.2 wt%, Fe: 0.25 wt%, Cu: 0.04 wt%, Mn: 0.03 wt%, Mg: 0.03 wt%, Zn: 0.04 wt%, Ti: 0.03 wt%, and Al: 99.7 wt%)) having a purity of 99.7 wt% was brought into contact with each of the raw material powders, to allow the molten aluminum alloy and the raw material powder to react with each other. In this case, the temperature of the molten aluminum was set to 800 to 900°C and the reaction time period was set to about 1 hour. After that, the resultant was allowed to cool naturally. Thus, evaluation samples of aluminum composite materials were obtained.

### 2. Evaluation result

### 2-1. Confirmation of formation of aluminum oxide

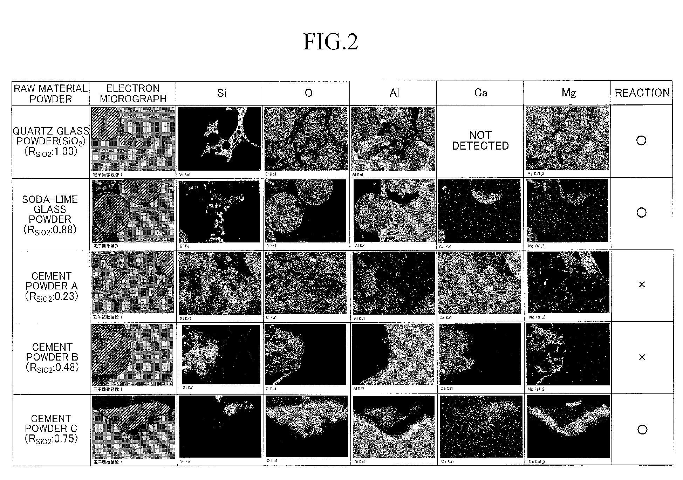

Each of the evaluation samples was observed with a FE-SEM (field emission scanning electron microscope) and subjected to component analysis with an EDX (energy dispersive X-ray analyzer). FIG. 2 shows photographs observed with a FE-SEM and component analysis results with an EDX for the respective evaluation samples.

In each of the FE-SEM (electron microscope) photographs shown in FIG. 2, shaded portions correspond to metal oxide particles constituting the raw material powder and portions around the shaded portions correspond to aluminum. Therefore, each of these evaluation samples is an aluminum composite material in which metal oxide particles are dispersed in an aluminum matrix. It should be noted that, before the molten aluminum is brought into contact, the main component of the metal oxide particles shown by the shaded portions is silicon dioxide.

In the case of using the quartz glass powder (SiO₂) or the soda-lime glass powder as the raw material powder, the analysis result with an EDX revealed that a silicon component was hardly detected in the particles shown by the shaded portions after the molten aluminum was brought into contact. Instead, an aluminum component and an oxygen component were detected in the particles. A silicon component was detected around the particles. These facts reveal that the silicon dioxide component contained in the raw material powder was replaced with aluminum oxide (alumina) in the aluminum oxide formation step.

Similarly, in the case of using the cement powder C as the raw material powder, the analysis result with an EDX revealed that a silicon component was only slightly detected in the particles shown by the shaded portions after the molten aluminum was brought into contact. Instead, an aluminum component and an oxygen component were detected in the particles. Thus, it is revealed that the silicon dioxide component was replaced with aluminum oxide in the aluminum oxide formation step.

In contrast, in the case of using the cement powder A or the cement powder B as the raw material powder, the analysis result with an EDX revealed that a silicon component was detected in a large amount and an aluminum component was hardly detected in the particles shown by the shaded portions even after the molten aluminum was brought into contact. That is, it is revealed that, in the case of using the cement powder A or the cement powder B as the raw material powder, a replacement reaction of the metal oxide particles (in particular, silicon dioxide particles) constituting the raw material powder with aluminum oxide does not occur. The ratios R_{SiO2} in the cement powder A and the cement powder B, in which the replacement reaction does not occur, are 0.23 and 0.48, respectively, and in contrast, the ratio R_{SiO2} in the cement powder C, in which the replacement reaction occurs, is 0.75. Therefore, it is found that, in the case of using cement powder as raw material powder, metal oxides (other than calcium oxide) contained in the cement powder, in particular, silicon dioxide, are reduced to form aluminum oxide when the ratio R_{SiO2} is 0.75 or more.

### 2-2. Hardness measurement

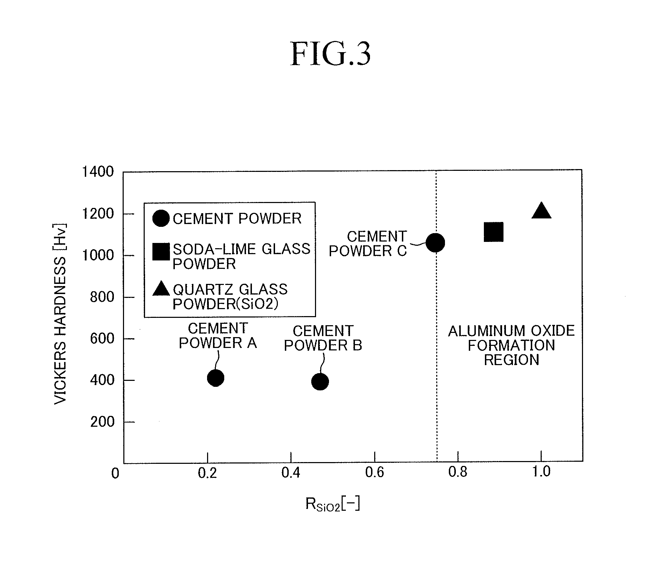

The hardnesses of the particles in the aluminum composite materials produced as described above were measured with a micro Vickers tester (10 gf). FIG. 3 shows the measurement results. As shown in FIG. 3, the hardness of the particles in the aluminum composite material using the cement powder A or B as the raw material powder was about from 384 to 437 Hv. In contrast, the hardness of the particles in the aluminum composite material using the cement powder C as the raw material powder was 1,020 Hv. These results reveal that the hardness of the aluminum composite material using the cement powder C as the raw material powder is much higher than the hardness of general cement by virtue of the formation of aluminum oxide. In addition, the hardness of the particles in the aluminum composite material using the cement powder C as the raw material powder is close to the hardness of the particles in the aluminum composite material using the quartz glass powder or the soda-lime glass powder as the raw material powder. Thus, it is found that, when an aluminum composite material is produced by using decalcified cement having a ratio R_{SiO2} of 0.75 or more, an aluminum composite material having sufficiently high rigidity can be produced.

As described above, the method of producing an aluminum composite material according to this embodiment includes: the decalcification treatment step of eluting the calcium oxide component from cement to form decalcified cement having a reduced content of the calcium oxide component so that the decalcified cement has a ratio of the mass of the silicon dioxide component W_{SiO2} to the sum total of the mass of the silicon dioxide component W_{SiO2} and the mass of the calcium oxide component W_{CaO}, (W_{SiO2}+W_{CaO}), the ratio being represented as R_{SiO2}(=W_{SiO2}/(W_{SiO2}+W_{CaO})), of 0.75 or more; and the aluminum oxide formation step of bringing molten aluminum into contact with the decalcified cement to replace, among metal oxide components contained in the decalcified cement, metal oxide components other than calcium oxide, in particular, the silicon dioxide component, with aluminum oxide.

According to the method of producing an aluminum composite material according to this embodiment, the content of the calcium oxide (CaO) component in the cement is reduced in the decalcification treatment step, and hence, the reactivity with the molten aluminum in the subsequent aluminum oxide formation step is improved. Especially when the decalcified cement to be formed in the decalcification treatment step has a ratio of the mass of the silicon dioxide (SiO₂) component W_{SiO2} to the sum total of the mass of the silicon dioxide (SiO₂) component W_{SiO2} and the mass of the calcium oxide (CaO) component W_{CaO}, (W_{SiO2}+W_{CaO}), the ratio being represented as R_{SiO2}(=W_{SiO2}/(W_{SiO2}+W_{CaO})), of 0.75 or more, the reduction reaction of silicon dioxide represented by the formula (1) sufficiently occurs, and among metal oxide components contained in the decalcified cement, metal oxide components other than the calcium oxide component, in particular, at least the silicon dioxide (SiO₂) component, are replaced with aluminum oxide (that is, aluminum oxide is formed). Therefore, an aluminum composite material including an aluminum oxide component can be produced through effective utilization of cement.

In addition, the aluminum composite material obtained by the production method according to this embodiment has a configuration in which aluminum oxide particles each having a high hardness are dispersed in an aluminum base material. Therefore, an aluminum composite material having high rigidity can be produced. Further, such aluminum composite material having high rigidity can be produced at low cost through utilization of inexpensive cement.

Further, impurities attached to the surface of the decalcified cement are removed through heating of the decalcified cement in the purification step, and hence, when the molten aluminum is brought into contact with the decalcified cement in the subsequent aluminum oxide formation step, a more improved reactivity between the molten aluminum and the decalcified cement can be achieved.

## Claims

1. A method of producing an aluminum composite material, the method comprising:
a decalcification treatment step of eluting a calcium oxide component from cement to form decalcified cement having a reduced content of the calcium oxide component; and
an aluminum oxide formation step of bringing molten aluminum into contact with the decalcified cement to replace, among metal oxide components contained in the decalcified cement, metal oxide components other than calcium oxide with aluminum oxide.

2. A method of producing an aluminum composite material according to claim 1, wherein the decalcified cement has a ratio of a mass of a silicon dioxide component W_{SiO2} to a sum total of the mass of the silicon dioxide component W_{SiO2} and a mass of the calcium oxide component W_{CaO}, (W_{SiO2}+W_{CaO}), the ratio being represented as R_{SiO2}(=W_{SiO2}/(W_{SiO2}+W_{CaO})), of 0.75 or more.

3. A method of producing an aluminum composite material according to claim 1 or 2, wherein the decalcification treatment step comprises a step of eluting the calcium oxide component from the cement through acid treatment of the cement.

4. A method of producing an aluminum composite material according to any one of claims 1 to 3, further comprising a purification step of heating the decalcified cement to remove impurities attached to a surface of the decalcified cement,
wherein the aluminum oxide formation step comprises a step of bringing the molten aluminum into contact with the decalcified cement in which the impurities are removed from the surface in the purification step.

5. A method of producing an aluminum composite material according to any one of claims 1 to 4, wherein, in the aluminum oxide formation step, the molten aluminum to be brought into contact with the decalcified cement has a temperature 100°C or more higher than a melting temperature of aluminum.
